# EUROPEAN PATENT APPLICATION

(11) **EP 2 709 006 A1**
(43) Date of publication of application: **19.03.2014**
(21) Application number: 12184580.4
(22) Date of filing: 14.09.2012
(51) Int. Cl.: G06F 9/455, H04L 29/08

(54) **Peripheral interface for residential IaaS**

(71) Applicant: Alcatel Lucent, 75007 Paris (FR)
(72) Inventor: Bui, Dinh Thai, 91620 Nozay (FR); Le Pallec, Michel, 91620 Nozay (FR)
(74) Representative: Camus, Olivier Jean-Claude

(57) **Abstract**

Method to connect at least one local physical peripheral to a remote virtual appliance provided by a cloud service provider characterized in that the method comprises the following steps:
- authenticating, through a peripheral interface device, a cloud service provider user identified by at least a user identifier,
- detecting physical peripheral devices connected to the peripheral interface device,
- selecting a virtual appliance among a list,
- negotiating connection parameters, to establish a network tunnel, the negotiation resulting parameters being dependent of the user identifier.
- activating the selected virtual appliance,
- connecting of peripheral devices to the virtual appliance.

## Description

### FIELD OF THE INVENTION

The present invention relates to a peripheral interface for residential IaaS.

### BACKGROUND OF THE INVENTION

Cloud Computing is becoming more and more adopted as it allows Cloud Service Providers to have appealing business models based on a "pay-as-you-go" service deployment. Although, there are several cloud services and different related definitions, three categories are commonly recognized.

SaaS (Software as a Service) cloud: it provides the client with a complete software application environment, including management and the user interface. Clients usually have access to the environment through a thin user interface (e.g. a web browser) which enables data entry and manages user interactions. The service provider must manage everything else, from the infrastructure to the architecture.

PaaS (Platform as a Service) cloud: it provides clients with a complete development environment, including virtual machines, operating systems, applications, services, development frameworks, transactions, and control structures. Clients can deploy their own applications or use existing applications programmed using PaaS-compatible languages and tools. The service provider is responsible for managing the cloud infrastructure and the operating systems, and clients develop, install and manage the applications they want to offer.

IaaS (Infrastructure as a Service) cloud: it provides hardware assets to clients, who can then provision them. Examples of these hardware assets are virtual computing systems, virtual storage resources and virtual network infrastructure (in fact they are shared amongst users with techniques to isolate control commands and data from different users). The service provider manages the cloud's physical infrastructure. Clients are responsible for deploying and managing all the other aspect of the infrastructure - including for example, the operating system, applications, and user interactions with the system.

The background is an admission of prior art and is entirely too long - please spend some time to delete potentially damaging text.

In some known solutions, sensors/peripherals do not have connectivity to the networkl (e.g., the cloud) and present specific physical interfaces. Driving such sensors/peripherals may be performed by using a true physical central unit presenting a configuration of CPU, GPU, RAM, memory or the like. Since a minimum hardware/physical/CPU configuration at the client level (e.g. at home) is still required for interfacing with residential peripherals/sensors presenting specific communication interfaces (e.g. USB, Firewire, eSATA, etc.). The residential user always has to own a computer with local storage and processing capabilities.

In some known solutions, residential users access an IaaS cloud using internetworking functions. Interworking functions map serial protocols (e.g. USB 2.0) over the network protocol (e.g. TCP/IP) at one end and perform the reverse operation at the other end. The interworking function is often materialized by a software module (e.g. Eltima Network products at http://www.virtualserialport.com/products/) which is to be installed at both ends into devices (one at each end) presenting an optimized hardware and software configuration. Those devices can be seen as gateways converting non-connected peripheral to connected ones. In a residential context those devices are the local computer and the Virtual Central Unit.

Although the solution is simple, it is not well adapted for residential cloud services as it is not built for this purpose:
- Neither automatic nor dynamic network resource allocation (e.g. bandwidth) based on usage, this leads to a waste of network resource or a bad perception of the cloud service by the user.
- No user authentication that is virtually anybody can connect a peripheral to the virtual appliance.
- No possibility for the user to select the Virtual Machine other than by remembering its IP address.
- No possibility for the user to customize the Virtual Machine before using it.

### SUMMARY OF THE INVENTION

The invention described in this document allows to be freed of any dedicated local processing resources. It enables the deployment of a full virtual PC or more precisely a Virtual PC Central Unit (VCU) supporting virtual interfaces. This allows the residential user to only use for his actual needs both in terms of software and hardware for the actual utilization/usage time.

The invention discloses a method which can be implemented by using very little computer power in terms of local/residential CPU capacity and memory capacity.

To this end the invention has for object a method to connect at least one local physical peripheral to a remote virtual appliance provided by a cloud service provider, **characterized in that** the method comprises the following steps:
- authenticating, through a peripheral interface device, a cloud service provider user identified by at least a user identifier,
- detecting physical peripheral devices connected to the peripheral interface device,
- selecting a virtual appliance among a list,
- negotiating connection parameters, to establish a network tunnel, the negotiation resulting parameters being dependent of the user identifier.
- activating the selected virtual appliance,
- connecting peripheral devices to the virtual appliance

Beside the main characteristics that have been mentioned in the preceding paragraphs, the method of the invention may have one or more of the following additional characteristics, taken individually or according to any technically possible combinations.

The peripheral devices are connected through encapsulation channels.

The encapsulation channels are transported within a network tunnel.

The connection parameters also depends on:
- a number of detected peripheral devices,
- the natures of detected peripheral devices

The connection parameters also depend on a configuration of the selected virtual appliance.

The configuration of the selected virtual appliance comprises a list of expected peripheral devices to be connected to this virtual appliance.

The selecting step comprises a step of configuring the selected virtual appliance.

The configuration step allows for adding or removing objects from an enumeration list of peripheral devices expected by the selected virtual appliance.

The authenticating step comprises a step of reading credentials in a memory.

The virtual appliance is of one type among the group formed by at least the following type: Virtual Central Unit, Virtual Set Top Box, Virtual Home Gateway.

To those ends the invention has also for object a digital data storage medium encoding a machine-executable program of instructions to perform the method according to any possible combination of the preceding characteristics.

A device performing the method according to any possible combination of the preceding characteristics.

### BRIEF DESCRIPTION OF THE FIGURE

The invention will be better understood upon reading the following description and examining the accompanying figures. These are presented for information purposes only and in no way limit the invention. Figures show:
- Figure 1: An infrastructure comprising an implementation of the invention.
- Figure 2: Steps according to the invention.

For clarity, the same or similar elements are identified by identical reference numerals throughout the figures.

### DESCRIPTION OF ONE EMBODIMENT OF THE INVENTION

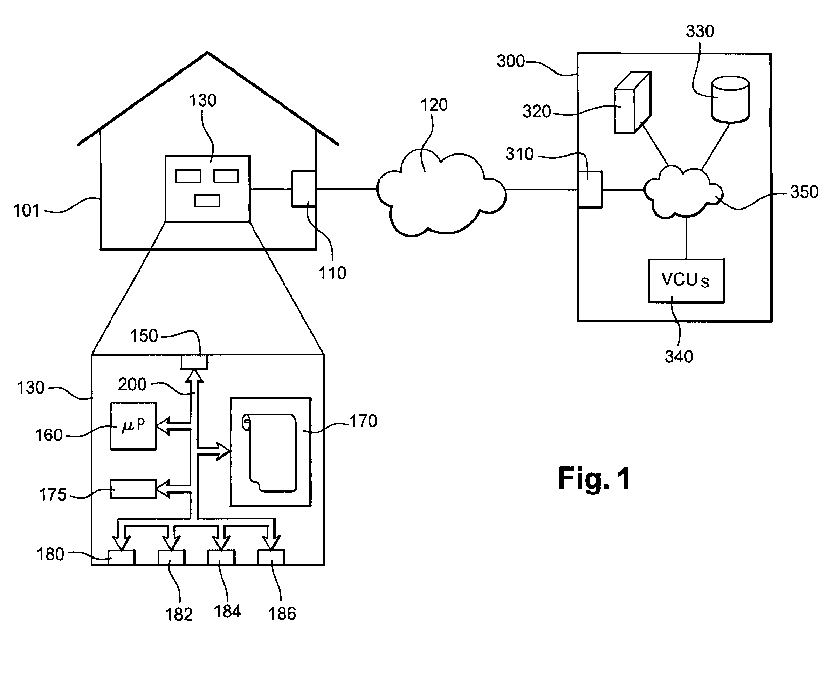

Figure 1 shows a home 101. Home, in this document, is also used in the sense of SOHO (Small Office Home Office) that is very small enterprise. Such a place is traditionally connected to the Internet by an ISP providing a box 110 comprising wired (Ethernet) and/or over the air (Wifi) connectivity. The box 110 is also connected to the Internet network 120. The box 110 is connected, by wire or by the air, to a device 130 implementing the invention. The device 130 comprises an interface circuit 150 allowing the connection between the device 130 and the box 110. The device 130 is thus connectable to the Internet Network 120. The Device 130 also comprises a microprocessor 160, a program memory 170 and a set of connectors. The set of connectors comprises, for example, a connector 180, connector 182, a connector 184 and a connector 186. The device 130 also comprises credentials memory 175 allowing storing information for the authentication of a user. The memory 175 is not necessarily a standalone component, it may be part of a larger embedded memory, it may also, in another example, be a part of a memory of a smartcard. In this last case the device 130 also comprises a not represented smartcard reader.

All elements 150 to 186 are interconnect by a bus 200. The device 130 is not reduced to the previously enumerated elements. Those elements are useful to understand the description of the invention. For example, when a device acts, it means that a microprocessor of said device interprets instruction codes stored in a program memory of said device.

One describes here a set of four connectors. The number of connectors is not a key factor for the implementation in the invention even if it is desirable that there is at least one. The connectors can be of any type known or hereafter developed. Some known configurations include as follows: one display connector, for a screen, and several USB (standardized by USB Implementer Forum) connectors for input devices such as keyboard, pointer device, and camera or for output devices such as printers. It should be appreciated that other types of connectors such as IEEE 1394 (or Firewire, standardized by IEEE), Bluetooth (standardized by the Bluetooth Special Interest Group), HDMI (standardized by the Consumer Electronic Association), IDE (standardized by the ANSI), SCSI (standardized by the ANSI), or the like may also be used.

It is also to be noticed that the connectors are not necessarily external connectors. For example for a touchpad there is no display connector or keyboard/mouse connector. In this case the connectors are embedded in the touchpad device and the touchscreen of the device is at least connected to the embedded display connector, to the embedded mouse connector. By embedded one also mean inner, that is a connector with no physical interface to the outside of the device.

Depending on the implementation of the invention, the device 130 is, for example, a box comprising physical connectors for the connection of the peripheral. In another example the device 130 is a touchpad embedding peripheral as screen and/or camera.

Figure 1 also shows an infrastructure 300 of a Cloud Service Provider. In a simplified manner, the infrastructure 300 includes an interface 310 with the Internet network 120, an authentication server 320, storage means 330 and virtualization means 340. The interface 310, the server 320, the means 330 and the means 340 are interconnected by a network 350.

In the infrastructure 300, the interface 310 is, at least, a tunnel proxy. One notes that tunneling may be realized between device 130 and interface 310. Tunneling may also be realized between device 130 and a virtual machine.

In the infrastructure 300, the server 320 allows to authenticate users of the cloud service provider managing the infrastructure. For example the authentication server is a Radius (E.g. IETF RFC 2867) one or a Diameter (E.g. IETF RFC 3588) one.

In the infrastructure 300, the storage means 330 allow, at least, to store data related to the users of the cloud service provider managing the infrastructure. Such data are, called as user's profile, provide with, for instance, details on service subscriptions and/or configuration element for virtual machine. Details on service subscription are, for example, usage remaining credit, network quality of service elements known as QOS among which: jitter, delay and bandwidth. Configuration elements are, for example: processing power, memory capacity, number and natures of peripheral devices to be connected.

In the infrastructure 300, the virtualization means 340 allows for the provisioning and implementation of virtual machines.

In the infrastructure 300 and in the simplest implementation, the network 350 is a switch.

The QOS elements of a profile may be used to set the properties of a network tunnel between the device 130, or box 110 depending on the embodiment, and the interface 310. Those elements should be used as follow.

Concerning the jitter parameter, timestamp packets and accurate time synchronization at both communication ends can be used to allow, for instance, for precisely monitoring packet one-way delay and to equalize those delays (e.g. thanks to a buffer) to reduce jitter.

Delay constraints depend on the application transported over the peripheral interface. As an illustration, mouse cursor lag time is taken in this document for discussions. The mouse cursor lag time is the time duration between the instant of the PC mouse position change by the user and the instant of the related mouse cursor position change on the PC screen. According to [3], the human being does not notice of lag under 100 ms. So, assuming the total processing time is about 50 ms then the round-trip time for the transmission is 50ms and the one-way transmission delay 50/2= 25ms. This allows for a theoretical transmission distance of 25 x 10⁻³x 3 x 10⁸ = 75 x 10⁵ m = 7500 km, which is very comfortable if optical transmission is used end-to-end. However, for gaming, the mouse cursor lag is reduced down to 50 ms, and the processing time can be higher due to high variability of video details (note that mouse cursor lag can be observed by game players even locally within the same PC as the local graphical card is not powerful enough). Moreover, wireless transmission processing time at the base-stations is also quite high (e.g. 3 or 4 ms round-trip time across the LTE eNodeB). This could reduce the one-way transmission time down to 1 ms ∼300 km of distance or even less. In any case, the Cloud Service Provider is better-positioned to make the trade-off between processing power/time budget and the transmission budget if he owns the transport network infrastructure (i.e. he is also Access Network Operator).

Bandwidth is useful for USB 2.0 and Firewire. For that type of peripheral device, tunnel bandwidth required is from 1.5 Mbits/s up to 480 Mbits/s while USB 3.0 bandwidth required can be up to 5 Gbits/s. These bandwidths are to be compared with available transmission rates, especially within the access part that usually presents a bottleneck. As an illustration, GPON upstream (resp. downstream) bandwidth is between 155 Kbits/s up to 2 Gbits/s (resp. from 1 Gibits/s up to 2 Gbits/s) and 10GPON upstream/downstream bandwidth can go up to 10 Gbits/s. However, LTE uplink bandwidth is limited to around 80 Mbits/s. Thus, compression techniques are required for wireless accesses.

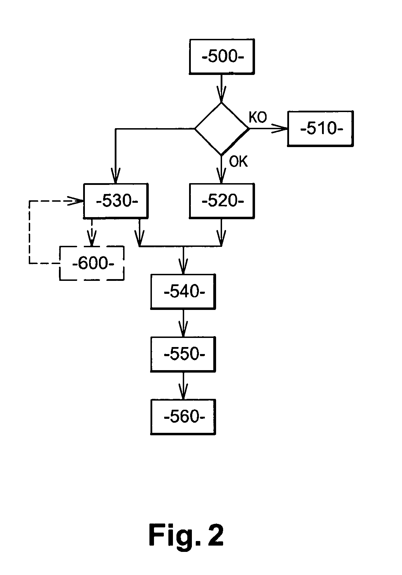

Figure 2 shows an authenticating step 500 started by device 130. During step 500 the device 130 uses credentials to build an authentication message and send said authenticating message to authentication server 320. The credentials are, for example, a login and a password, or a token. A token is for example a session identifier, or a security certificate. Credentials are read from the memory 175. The content of memory 175 is part of a configuration of the device 130. An identifier, URL or IP Address, pointing to the authentication server 320 could also be part of this configuration. The step 500 is initiated by any predefined action of a user on the device 130. Such an action is for example the activation of a push button awaking the device 130.

In an embodiment of the invention the authenticating step 500 is preceded by control message exchanges which are part of first steps of the establishment of a tunnel between the device 130 and the interface 310. This tunnel can be of several types among at least: L2TP (E.g. IETF RFC 2661), PPTP (E.g. IETF RFC 2637), IPSec (E.g. IETF RFC 2406) or any SSL tunnel. The list is not exhaustive. This allows securing communication between the device 130 and the interface 310. The device 130 transmits appropriate authentication information within the authentication request message towards the authentication server.

In a variant of the invention if the device 130 is activated but contains no credentials in memory 175, then device 130 enters in a setup step in which the user is asked to fill an electronic form to populate the configuration of device 130. In another variant of the invention the device 130 is configured by the Cloud Service Provider or the configuration is downloaded through the network.

The response of the authentication server 320 to the authentication request message may be of several types:
- An access deny message is transmitted. In this case the device 130 aborts any on-going operation.
- An HTML-formatted access deny message,
- An HTML-formatted access accept message comprising a list of yet configured virtual machine.
- A message of ignition of a connection to a "control" virtual machine. In this case, a control tunnel is established between the device 130 and the "control" virtual machine.
- Etc.

In case of HTML-formatted message, one will understand that the device 130 comprises rendering means to interpret the HTML code.

If the access is denied, then step 500 is followed by an ending step 510 where all operations are aborted and failure message is displayed on a local screen connected to the device 130.

If the access was not denied, device starts several steps:
- Detecting step 520 for the detection of physical peripherals connected to the set of connectors,
- Selecting step 530 of a virtual machine (also called virtual appliance) among a list.

In an embodiment of the invention the detecting step 520 may be started at the same time than the authenticating step 500. Detecting step 520 may also be started before or during authentication step 500. The result of detecting step 520 is a list of peripheral devices and their natures. A nature is, for example, display, camera, printer, mouse, keyboard. The list of possible natures is not exhaustive.

During the selecting step 530 a list of virtual machines is displayed on a screen connected to device 130. A user should then select one of them. The display of this list of virtual machines could result from the interpretation of an HTML response or by the handle of the connection to a "control" virtual machine that is to handle the message of ignition of a connection. Here one uses "control" virtual machine as one uses "home page" in a http context. The "control" virtual machine allows for the management of a minimum set of virtual machines and of a minimum set of peripheral devices. This enables the user to interact with the control interface. In any case the list is built from data retrieved in storages means 330. Those data are related to the credentials used in the authenticating step 500. An HTML page is then built with those data. The navigation in such page is made according to a session linked to the credentials submitted during authenticating step 500.

The connection to a "control" virtual machine means that the infrastructure 300 provisions, or assigns from a pool, a predefined virtual machine to the user authenticated during step 500, and configure this machine to make it capable to read/edit the profile of said user. For example such virtual machine runs an operating system in which a session was opened using the credentials provided during step 500, those credentials being associated to some rights in the reading and editing of data in the storage means 330. In this case, a minimum set of peripheral devices such as a screen, and at least an input device (mouse, keyboard) connected to device 130 are connected to the "control" virtual machine.

In another embodiment of the invention there is a designated default virtual machine that is automatically selected.

Selecting step 530 ends with the selection of a virtual machine among the list of user owned virtual machines. Device 130 then builds and sends a connection request message including an identifier of the selected virtual machine and also the list of connected peripheral.

The connection request message starts a negotiating step 540. This step can be run by both the device 130 and/or the infrastructure 300. For this negotiating step one needs:
- The configuration of the selected virtual machine to have a required peripheral devices list, this is stored in storage means 330,
- The QOS parameters of the authenticated user, this is stored in the storage means 330
- The data of the connection message.

In negotiating step 540 one intersects the required peripheral list and the connected peripheral devices list. From this intersection results a list a connectable peripheral devices. From the natures of these connectable peripheral devices one deduces the needed QOS parameters. The needed QOS parameters are confronted to the accessible QOS for the authenticated user. Basically for each QOS parameter one select the needed one unless the accessible one is worse, in this case the worse is selected. The influence of peripheral nature on QOS parameters was discussed before in this description.

The negotiating step 540 ends with the establishment of an exploitation tunnel (L2TP or other) between the device 130 and the interface 310, this tunnel being established according to the negotiated QOS parameters.

It is to be noted that the preceding steps were performed through a tunnel too, that is a first tunnel. This first tunnel is then a called a control tunnel. This control tunnel is built between the device 130 and the interface 310 or between the device 130 and a virtual machine, for example the "control" virtual machine. This tunnel may remain or be dropped at the establishment of the exploitation tunnel. The fact of keeping the first tunnel provides a control tunnel allowing switching easily from a control interface to an exploitation interface. Such a control interface may also be obtained by using channel in a tunnel. In this case channel is associated to at least a network port or network socket.

In another embodiment of the invention an equivalent of the control tunnel is a subset of allocated channel in the exploitation tunnel.

In yet another embodiment of the invention, the establishment of the exploitation tunnel is a reconfiguration of the existing tunnel.

The negotiating step 540 is followed by an activating step 550. In this step 550 the infrastructure 300 provisions and starts the selected virtual machine in the virtualization means 340. In a following connecting step 560 each connectable peripheral device is associated to a channel in the exploitation tunnel that is to a couple of network ports at the device 130 and virtual machine sides.

This enables the encapsulation of data transmitted/received by the connectable peripheral devices into encapsulation channels within the exploitation tunnel between the selected virtual machine and the device 130. These channels act like virtual wires emulating peripheral connections over the network. Thus, the established exploitation tunnel and encapsulated channels bridge their respective peripheral devices to the selected virtual machine. The later installs appropriate interface termination functions in order to manage those peripheral devices. Interworking functions embedded within every interface termination (device 130 and virtual machine) function allows for providing the network infrastructure (i.e. Transport tunnel & Tunnel Proxy) with information on application type (e.g. video if the connected peripheral device is a camera) and its related QOS requirements. This allows for dynamically tuning the network QOS accordingly to the overall user application requirements and for optimizing the network resource usage (i.e. even though the user has subscribed for a big amount of bandwidth, he/she does not use all of this bandwidth at a given point in time).

With this implementation the invention encapsulates the peripheral data flux at a very low level. This requires very few processing resources at device 130 side. This is made possible by the fine tuning of QOS parameters during negotiating step. The invention allows, at the peripheral device level, emulating the transport interface with no processing, but an optional compression, of the data transported. Data produced by, or for, a peripheral are transported by the invention as they would have been through a wire connected between the peripheral and a connector of a machine.

Thus a device implementing the method according to the invention comprises protocol stacks that allow encapsulating the aforementioned standardized peripheral (i.e. including both serial and parallel interfaces) protocol messages and through the access operator network to the Cloud Service Provider. Those encapsulations, called as channels, are established within the aforementioned tunnel (i.e. within a well-dimensioned network tunnel in terms reserved network resources). The encapsulation protocol could be proprietary within a given Cloud Service Provider. But a standardized method allows for using the same device with different Cloud Service Providers. For example RFC3347 - Small Computer System Interface (SCSI) over the Internet (encapsulation of SCSI protocol over IP).disclose a usable encapsulation protocol. The fact that both the hardware and the software should be provided by the Cloud Service Provider allows hardware optimization. (E.g. minimum processing power - outsourcing this resource to the data center).

Usually the provisioned virtual machine, also called virtual appliance, is a VCU: Virtual Central Unit. That is the virtual equivalent of a physical computer. The invention stays pertinent in the case of other virtualizations such as vSTB (virtual Set Top Box) or vHGW (virtual Home GateWay).

In a variant of the invention, in step 530, the display of the list of virtual machines allows to select a virtual machine for running or for editing. Creating is just a special case of editing. The running case was described before. In case of editing, device 130 runs in a step 600. In step 600, the configuration of the selected virtual machine, read in the storage means 330, is displayed on a local screen, the configuration being formatted as an editing form allowing for setting the properties of the selected virtual machine. The editing form also comprises at least a button allowing for validating modification done by a user in the values of the editing form. If a validation occurs, the new values of the forms are committed in the storage means 330.

The editable comprises a selection of the following:
- Processing capacity, number of cores for example,
- Memory,
- Peripheral devices required, at least their natures
- Etc...

## Claims

1. A Method to connect at least one local physical peripheral to a remote virtual appliance provided by a cloud service provider **characterized in that** the method comprises the following steps:
- authenticating (500), through a peripheral interface device, a cloud service provider user identified by at least a user identifier,
- detecting (520) physical peripheral devices connected to the peripheral interface,
- selecting (530) a virtual appliance among a list,
- negotiating (540) connection parameters, to establish a network tunnel, the negotiation resulting parameters being dependent of the user identifier.
- activating (550) the selected virtual appliance,
- connecting (560) of peripheral devices to the virtual appliance.

2. Method according to any of preceding claims, **characterized in that** peripheral devices are connected through encapsulation channels.

3. Method according to preceding claim, **characterized in that** encapsulation channels are transported within a network tunnel.

4. Method according to any of preceding claims, **characterized in that** the connection parameters also depends on:
- a number of detected peripheral devices,
- the natures of detected peripheral devices

5. Method according to any of preceding claims, **characterized in that** the connection parameters also depends of a configuration of the selected virtual appliance.

6. Method according to claim 5, **characterized in that** the configuration of selected virtual appliance comprises a list of expected peripheral devices to be connected to this virtual appliance.

7. Method according to any of preceding claims, **characterized in that** the selecting step comprises a step of configuring the selected virtual appliance.

8. Method according to claim 7, **characterized in that** the configuration step allows to add or remove objects from an enumeration list of peripheral devices expected by the selected virtual appliance.

9. Method according to any of preceding claims, **characterized in that** the authenticating step comprises a step of reading credentials in a memory.

10. Method according to any of preceding claims, **characterized in that** the virtual appliance is of one type among the group formed by at least the following type: Virtual Central Unit, Virtual Set Top Box, Virtual Hose Gateway.

11. A digital data storage medium encoding a machine-executable program of instructions to perform the method according to one of the preceding claims.

12. A device performing the method according to one of the preceding claims.
